# EUROPEAN PATENT APPLICATION

(11) **EP 2 624 269 A1**
(43) Date of publication of application: **07.08.2013**
(21) Application number: 10857656.2
(22) Date of filing: 27.09.2010
(51) Int. Cl.: H01G 9/04, H01M 14/00, H01L 51/44

(54) **CONDUCTING POLYMER-CARBON MATERIAL COMBINED COUNTER ELECTRODE AND MANUFACTURING MATHOD THEREOF**

(71) Applicant: Ocean's King Lighting Science & Technology Co., Ltd., Nanhai Rd., Nanshan Shenzhen, Guangdong 518054 (CN)
(72) Inventor: ZHOU, Mingjie, Guangdong 518054 (CN); WANG, Ping, Guangdong 518054 (CN); HUANG, Hui, Guangdong 518054 (CN); CHEN, Jixing, Guangdong 518054 (CN)
(74) Representative: Johnson, Richard Alan
(86) International application number: PCT/CN2010/077365
(87) International publication number: WO 2012/040893

(57) **Abstract**

A conducting polymer-carbon material combined counter electrode for dye-sensitized solar cell comprises a conducting substrate (3), and a carbon material (1) and a conducting polymer (2) coated on the conducting substrate (3). A method for manufacturing the conducting polymer-carbon material combined counter electrode comprises steps: mixing the carbon material (1) with the conducting polymer (2) into a uniform suspension, cleaning and surface processing the conducting substrate (3), coating the suspension on the conducting substrate (3) and drying, to obtain the combined counter electrode.

## Description

### FIELD OF THE INVENTION

The present invention relates to solar cell field, more particularly, relates to a conducting polymer-carbon material combined counter electrode for dye-sensitized solar cell and manufacturing method thereof.

### BACKGROUND OF THE INVENTION

In the 1990s, M.Gratzel, et al of the Ecole Polytechnique Fédérale de Lausanne, Switzerland, used the organic complex of transition metal ruthenium as dye adsorbing on the titanium dioxide nanocrystalline porous film cell for the first time, the energy conversion efficiency of the cell reached 7.1%. In 1993, M.Gratzel, et al reported dye-sensitized nanocrystalline solar cell whose photoelectric conversion efficiency reached 10% once again. The photoelectric conversion efficiency of dye-sensitized solar cell had reached 11 % by 1997. Till then, the dye-sensitized solar cell has attracted worldwide attention.

This kind of cell is mainly composed of transparent conductive substrate, nanocrystalline porous film, sensitizer, electrolyte (I⁻/I₃⁻) solution and transparent counter electrode. After providing electron, electron donor (I⁻) in electrolyte solution spreads to the counter electrode, obtains electron from counter electrode and be reduced. The catalytic reduction activity of the counter electrode determines the migration speed of the charge on the electrode/electrolyte interface, the migration speed of the charge affect the recombination probability of I₃ and TiO₂ conduction band electrons directly, the faster of migration speed, the smaller of recombination probability, the smaller of charge loss, and vice versa, the greater of charge loss. An efficient counter electrode must meet the characteristics of high catalytic activity, low resistance and corrosion resistance. Although traditional platinum counter electrode has great catalytic activity, while the platinum counter electrode itself is an expensive rare materials, and the preparation process thereof is complicated, so it is not good for large-scale production and application in the future.

### SUMMARY OF THE INVENTION

Solving the technical problem, the invention provides a conducting polymer-carbon material combined counter electrode for dye-sensitized solar cell with high performance and low cost and manufacturing method thereof, which overcomes the limitations of expensive and complex manufacturing method of conventional platinum counter electrode.

The technical solution to solve the technical problem in the present invention is: a conducting polymer-carbon material combined counter electrode for dye-sensitized solar cell is provided; said conducting polymer-carbon material combined counter electrode comprises a conducting substrate, said conducting polymer-carbon material combined counter electrode also comprises a carbon material and a conducting polymer coated on said conducting substrate.

As a further improvement of the conducting polymer-carbon material combined counter electrode of present invention, said carbon material is at least one of graphite, acetylene black, carbon black, activated carbon, single-walled carbon nanotubes, multi-walled carbon nanotubes and fullerenes.

As a further improvement of the conducting polymer-carbon material combined counter electrode of present invention, said conducting polymer is a mixture of poly 3, 4-dioxo-vinyl thiophene and sodium polystyrene sulfonate, and the mass ratio of poly 3, 4-dioxo-vinyl thiophene to sodium polystyrene sulfonate ranges from 1:2 to 1:6.

As a further improvement of the conducting polymer-carbon material combined counter electrode of present invention, said conducting substrate is one of indium-tin oxide glass, fluorine doped tin oxide glass, carbon steel, stainless steel, aluminum doped zinc oxide, magnesium-indium oxide, nickel-tungsten oxide, metal nitrides, metal selenides, metal sulfides, copper foam, aluminum foam, copper alloy foam and aluminum alloy foam.

And, a manufacturing method of conducting polymer-carbon material combined counter electrode, comprising steps:

mixing the carbon material with the conducting polymer into a uniform suspension;

cleaning and surface processing the conducting substrate;

coating the said suspension on the said conducting substrate and drying, to obtain the said conducting polymer-carbon material combined counter electrode.

As a further improvement of the method of present invention, the step of mixing the carbon material with the conducting polymer into a uniform suspension comprising: mixing the suspension with the mass percent concentration of 5% to 50%, and then ultrasonic dispersing the suspension for 30 minutes.

As a further improvement of the method of present invention, said surface processing is oxygen plasma treatment, UV-ozone treatment, aqua regia treatment, hydrogen peroxide treatment, acid treatment or chemical polishing treatment.

As a further improvement of the method of present invention, the step of coating the said suspension on the said conducting substrate and drying comprises: coating the said suspension on the said conducting substrate by using spin-coater, the spin speed is 500 to 4000 revolutions per minute, and the spin time is 30 seconds, then, baking the conducting substrate for 15 to 50 minutes at the temperature of 100 to 200 .

As a further improvement of the method of present invention, said coating further comprises scrape coating.

In the present invention, mixture of poly 3, 4-dioxo-vinyl thiophene and sodium polystyrene sulfonate has high conductivity and thus has certain viscosity, so the counter electrode prepared by the mixture and carbon material can further promote the conductivity of the material, on the other hand, it can make the material and material, material and the substrate connecting tightly, it accelerates the rate of electron transporting in the external circuit and plays an active role in improving the performance of solar cell. Meanwhile, carbon material of present invention has a relatively high specific surface area and conductive properties, these features can supply more catalytic active sites for I₃⁻ in the oxidation-reduction reaction of counter electrode, increase the oxidation-reduction reaction probability of I₃⁻ and the electron in the external circuit, and reduce the recombination probability of I₃⁻ and conduction band electrons, greatly improve the photovoltaic performance of solar cell. Therefore, the prepared counter electrode has photovoltaic performance which similar to platinum electrode or even better.

In addition, there are three advantages about preparing counter electrode by the way of spin coating: first, the repeatability problems occurring in the preparation of electrode is greatly improved; second, the uniformity of electrode material on the substrate is controlled better; third, the thickness of electrode material is controlled better. Meanwhile, this manufacturing method can maintain a high energy conversion efficiency of solar cell and also has a strong operability, greatly shortens the preparation process and the production cost of the solar cell, it is beneficial to promote the industrialization and commercialization development of dye-sensitized solar cell.

### BRIEF DESCRIPTION OF THE DRAWINGS

Further description of the present invention will be illustrated, which combined with embodiments in the drawings:

Fig. 1 is a flow chart of manufacturing method of conducting polymer-carbon material combined counter electrode;

Fig. 2 is a schematic diagram of conducting polymer-carbon material combined counter electrode;

Fig. 3 is a current density-voltage curve of solar cell prepared by using combined counter electrode in example 2.

### DETAILED DESCRIPTION OF ILLUSTRATED EMBODIMENTS

Further description of the present invention will be illustrated, which combined with embodiments and drawings, in order to make the purpose, the technical solution and the advantages clearer. It will be understood that the embodiments are illustrative and that the invention scope is not so limited.

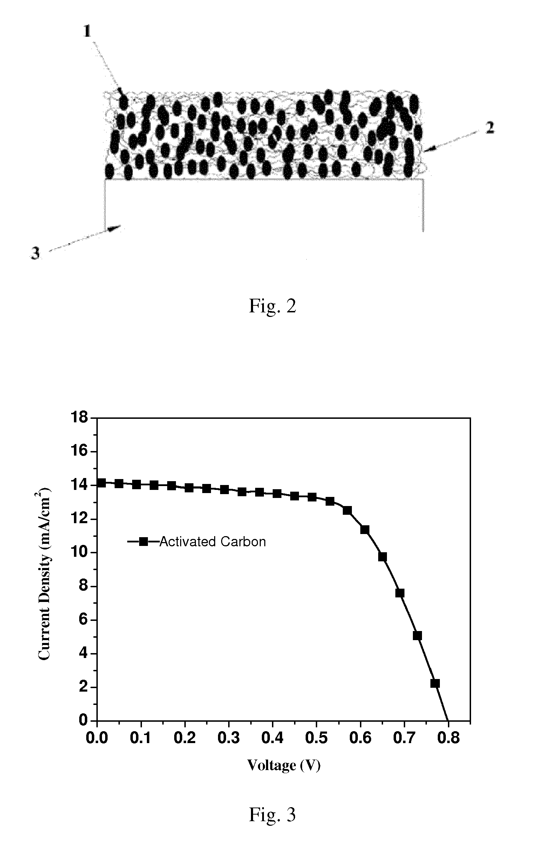

The present invention provides a conducting polymer-carbon material combined counter electrode for dye-sensitized solar cell, the conducting polymer-carbon material combined counter electrode is formed by coating the uniform suspension which prepared by mixing the carbon material 1 with the conducting polymer 2 on the conducting substrate 3, as shown in Fig. 2.

Wherein, the carbon material is at least one of graphite, acetylene black, carbon black, activated carbon, single-walled carbon nanotubes, multi-walled carbon nanotubes and fullerenes.

The conducting polymer is a mixture of poly 3, 4-dioxo-vinyl thiophene and sodium polystyrene sulfonate, and the mass ratio of poly 3, 4-dioxo-vinyl thiophene to sodium polystyrene sulfonate ranges from 1:2 to 1:6.

The conducting substrate is one of indium-tin oxide glass, fluorine doped tin oxide glass, carbon steel, stainless steel, aluminum doped zinc oxide, magnesium-indium oxide, nickel-tungsten oxide, metal nitrides, metal selenides, metal sulfides, copper foam, aluminum foam, copper alloy foam and aluminum alloy foam.

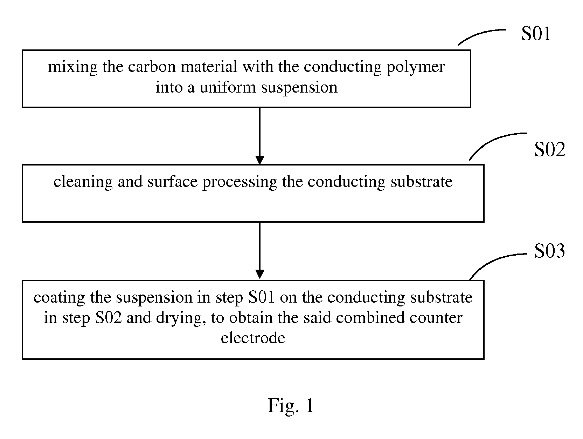

As shown in Fig. 1, the flow of manufacturing method of conducting polymer-carbon material combined counter electrode is disclosed in Fig. 1, the manufacturing method comprising steps:

S01: mixing the carbon material with the conducting polymer into a uniform suspension;

S02: cleaning and surface processing the conducting substrate;

S03: coating the suspension in step S01 on the conducting substrate in step S02 and drying, to obtain the said conducting polymer-carbon material combined counter electrode.

In said step S01, mixing the suspension with the mass percent concentration of 5% to 50%, and then ultrasonic dispersing the suspension for 30 minutes. In said step S02, said surface processing is oxygen plasma treatment, UV-ozone treatment, aqua regia treatment, hydrogen peroxide treatment, acid treatment or chemical polishing treatment. In said step S03, coating suspension on the conducting substrate by using spin-coater, the spin speed is 500 to 4000 revolutions per minute, and the spin time is 30 seconds, then, baking the conducting substrate for 15 to 50 minutes at the temperature of 100°C to 200 °C. Can be understood, the way of the coating can also be the other ways, such as scrape coating, etc.

In the present invention, the mixture of poly 3, 4-dioxo-vinyl thiophene and sodium polystyrene sulfonate has high conductivity and thus has certain viscosity, so the counter electrode prepared by the mixture and carbon material can further promote the conductivity of the material, on the other hand, it can make the material and material, material and the substrate connecting tightly, it accelerates the rate of electron transporting in the external circuit and plays an active role in improving the performance of solar cell.

Meanwhile, carbon material of present invention has a relatively high specific surface area and conductive properties, these features can supply more catalytic active sites for I₃ in the oxidation-reduction reaction of counter electrode, increase the oxidation-reduction reaction probability of I₃ and the electron in the external circuit, and reduce the recombination probability of I₃ and conduction band electrons, greatly improve the photovoltaic performance of solar cell. Therefore, the prepared counter electrode has photovoltaic performance which similar to platinum electrode or even better.

Furthermore, this manufacturing method can maintain a high energy conversion efficiency of solar cell and also has a strong operability, greatly shortens the preparation process and the production cost of the solar cell, it is beneficial to promote the industrialization and commercialization development of dye-sensitized solar cell.

Different manufacturing methods and other features of present invention are illustrated in the following embodiments.

Example 1

The indium-tin oxide glass is cut to the required size, and then ultrasonic cleaned successively in detergent, deionized water, acetone, ethanol, isopropanol for 15 minutes (min), after cleaning, the indium-tin oxide glass is treated by oxygen plasma, the treatment time is 5 to 15 minutes (min), and the treatment power is 10W to 50W. The main role of oxygen plasma treatment is to reduce the roughness and the contact angle of the conductive glass surface, to improve the wettability and adsorbability of the conductive glass surface, and to further remove the organic pollutant on the surface of conductive glass. After treatment, the indium-tin oxide glass is dried and reserved to use. Mixing the carbon black with the mixture of poly 3, 4-dioxo-vinyl thiophene and sodium polystyrene sulfonate and the mass ratio of poly 3, 4-dioxo-vinyl thiophene to sodium polystyrene sulfonate is 1:6, to form the suspension of different concentration(the mass fraction of the suspension ranges from 5% to 50%), the suspension is dropped on the spin-coater, then coated on the conducting glass at the speed of 500 to 4000 revolutions per minute, and the spin time is 30 seconds, then, baking the conducting substrate for 30 minutes at the temperature of 150°C and drying, to obtain the required combined counter electrode of dye-sensitized solar cell.

Example 2

The indium-tin oxide glass is cut to the required size, and then ultrasonic cleaned successively in detergent, deionized water, acetone, ethanol, isopropanol for 15 min, after cleaning, the indium-tin oxide glass is treated by oxygen plasma, the treatment time is 5 min to 15 min, and the treatment power is 10W to 50W. the carbon black in example 1 is replaced by activated carbon, mixing the activated carbon with the mixture of poly 3, 4-dioxo-vinyl thiophene and sodium polystyrene sulfonate and the mass ratio of poly 3, 4-dioxo-vinyl thiophene to sodium polystyrene sulfonate is 1:6, to form the suspension of different concentration(the mass fraction of the suspension ranges from 5% to 50%), the suspension is dropped on the spin-coater, then coated on the conducting glass at the speed of 500 to 4000 revolutions per minute, and the spin time is 30 seconds, then, baking the conducting substrate for 30 min at the temperature of 150°C and drying, to obtain the required combined counter electrode of dye-sensitized solar cell.

Example 3

The indium-tin oxide glass is cut to the required size, and then ultrasonic cleaned successively in detergent, deionized water, acetone, ethanol, isopropanol for 15 min , after cleaning, the indium-tin oxide glass is treated by oxygen plasma, the treatment time is 5 min to 15 min, and the treatment power is 10W to 50W. the carbon black in example 1 is replaced by activated carbon, mixing the activated carbon with the mixture of poly 3, 4-dioxo-vinyl thiophene and sodium polystyrene sulfonate and the mass ratio of poly 3, 4-dioxo-vinyl thiophene to sodium polystyrene sulfonate is 1:4, to form the suspension of different concentration(the mass fraction of the suspension ranges from 5% to 50%), the suspension is dropped on the spin-coater, then coated on the conducting glass at the speed of 500 to 4000 revolutions per minute, and the spin time is 30 seconds, then, baking the conducting substrate for 30 min at the temperature of 150°C, and drying, to obtain the required combined counter electrode of dye-sensitized solar cell.

Example 4

The indium-tin oxide glass is cut to the required size, and then ultrasonic cleaned successively in detergent, deionized water, acetone, ethanol, isopropanol for 15 min, after cleaning, the indium-tin oxide glass is treated by oxygen plasma, the treatment time is 5 min to 15 min, and the treatment power is 10W to 50W. The carbon black in example 1 is replaced by acetylene black, mixing the acetylene black with the mixture of poly 3,4-dioxo-vinyl thiophene and sodium polystyrene sulfonate and the mass ratio of poly 3, 4-dioxo-vinyl thiophene to sodium polystyrene sulfonate is 1:6, to form the suspension of different concentration(the mass fraction of the suspension ranges from 5% to 50%), the suspension is dropped on the spin-coater, then coated on the conducting glass at the speed of 500 to 4000 revolutions per minute, and the spin time is 30 seconds, then, baking the conducting substrate for 30 min at the temperature of 150°C and drying, to obtain the required combined counter electrode of dye-sensitized solar cell.

Example 5

The indium-tin oxide glass in example 1 is replaced by copper foam, copper foam is cut to the required size, and then ultrasonic cleaned successively in detergent, deionized water, acetone, ethanol, isopropanol for 15min. After treatment, the indium-tin oxide glass is dried and reserved to use. Mixing the carbon black with the mixture of poly 3, 4-dioxo-vinyl thiophene and sodium polystyrene sulfonate and the mass ratio of poly 3, 4-dioxo-vinyl thiophene to sodium polystyrene sulfonate is 1:6, to form the suspension of different concentration(the mass fraction of the suspension ranges from 5% to 50%), the suspension is dropped on the spin-coater, then coated on the conducting glass at the speed of 500 to 4000 revolutions per minute, and the spin time is 30 seconds, then, baking the conducting substrate for 30 min at the temperature of 150°C and drying, to obtain the required combined counter electrode of dye-sensitized solar cell.

Solar cell can be prepared by using counter electrode prepared by any of the above embodiments, the anode substrate of dye-sensitized solar cell, porous nanocrystalline films, dye sensitizing agent and electrolyte. The selected material and manufacturing method thereof are well known to the technicians in the art. For example, TiO₂ porous electrode can use P25 type titanium dioxide particles, the nano-semiconductor materials such as ZnO, SnO₂, Nb₂O₅ and SrTiO₃ can also be used. Porous nanocrystalline film can be prepared by using any suitable methods such as scrape coating, screen-printing, gel method or spray method. Electrolyte uses liquid electrolyte which containing 0.5M KI, 0.05M I₂, and can also use polymer electrolyte. Dye sensitizer uses N719, also N3, black dye or some efficient triphenylamine dye.

Fig. 3 is a current density-voltage curves of solar cell by using counter electrode prepared in example 2, the test result is compared with Chinese patent publication NO. CN101562077A, due to the large specific surface area of activated carbon (much larger than carbon aerogels), this characteristic can accelerate oxidation-reduction reaction of I₃⁻ on the surface of counter electrode, avoid the recombination of I₃⁻ and conduction band electrons (Imoto K, Takahashi K, Yamaguchi T, Komura T, Nakamura J, Murata K. High-performance carbon counter electrode for dye-sensitized solar cells [J]. Solar Energy Materials & Solar Cells. 2003, 79: 459-469.), open circuit voltage reaches 0.80V, current reaches 14.15mA/cm², meanwhile, there are three advantages about preparing counter electrode by the way of spin coating: first, the repeatability problems occurring in the preparation of electrode is greatly improved; second, the uniformity of electrode material on the substrate is controlled better; third, the thickness of electrode material is controlled better. Therefore, the counter electrode (prepared in example 2) of dye-sensitized solar cell can obtain the photovoltaic performance which similar to platinum electrode or even better, it is an ideal material in substitution for platinum electrodes in the future.

What is said above are only preferred examples of present invention, not intended to limit the present invention, any modifications, equivalent substitutions and improvements etc. made within the spirit and principle of the present invention, should be included in the protection range of the present invention.

## Claims

1. A conducting polymer-carbon material combined counter electrode for dye-sensitized solar cell, said conducting polymer-carbon material combined counter electrode comprises a conducting substrate, wherein, said conducting polymer-carbon material combined counter electrode also comprises a carbon material and a conducting polymer coated on said conducting substrate.

2. The conducting polymer-carbon material combined counter electrode of claim 1, wherein, said carbon material is at least one of graphite, acetylene black, carbon black, activated carbon, single-walled carbon nanotubes, multi-walled carbon nanotubes and fullerenes.

3. The conducting polymer-carbon material combined counter electrode of claim 1, wherein, said conducting polymer is a mixture of poly 3, 4-dioxo-vinyl thiophene and sodium polystyrene sulfonate, and the mass ratio of poly 3, 4-dioxo-vinyl thiophene and sodium polystyrene sulfonate ranges from 1:2 to 1:6.

4. The conducting polymer-carbon material combined counter electrode of claim 1, wherein, said conducting substrate is one of indium-tin oxide glass, fluorine doped tin oxide glass, carbon steel, stainless steel, aluminum doped zinc oxide, magnesium-indium oxide, nickel-tungsten oxide, metal nitrides, metal selenides, metal sulfides, copper foam, aluminum foam, copper alloy foam and aluminum alloy foam.

5. A manufacturing method of a conducting polymer-carbon material combined counter electrode, comprising steps:
mixing the carbon material with the conducting polymer into a uniform suspension;
cleaning and surface processing the conducting substrate;
coating the said suspension on the said conducting substrate and drying, to obtain the said conducting polymer-carbon material combined counter electrode.

6. The manufacturing method of a conducting polymer-carbon material combined counter electrode of claim 5, wherein, the step of mixing the carbon material with the conducting polymer into a uniform suspension comprising:
mixing the carbon material with the conducting polymer into a uniform suspension with the mass percent concentration of 5% to 50%, and then ultrasonic dispersing suspension for 30 minutes.

7. The manufacturing method of a conducting polymer-carbon material combined counter electrode of claim 5, wherein, said surface processing is oxygen plasma treatment, UV-ozone treatment, aqua regia treatment, hydrogen peroxide treatment, acid treatment or chemical polishing treatment.

8. The manufacturing method of a conducting polymer-carbon material combined counter electrode of claim 5, wherein, the step of coating the said suspension on the said conducting substrate and drying comprises: coating the said suspension on the said conducting substrate by using spin-coater, the spin speed is 500 to 4000 revolutions per minute, and the spin time is 30 seconds, then, baking the conducting substrate for 15 to 50 minutes at the temperature of 100°C to 200°C.

9. The manufacturing method of a conducting polymer-carbon material combined counter electrode of claim 5, wherein, said coating further comprises scrape coating.

10. The manufacturing method of a conducting polymer-carbon material combined counter electrode of claim 5, wherein, said carbon material is at least one of graphite, acetylene black, carbon black, activated carbon, single-walled carbon nanotubes, multi-walled carbon nanotubes and fullerenes.
